# EUROPÄISCHE PATENTANMELDUNG

(11) **EP 2 535 205 A1**
(43) Veröffentlichungstag der Anmeldung: **19.12.2012**
(21) Anmeldenummer: 12164323.3
(22) Anmeldetag: 16.04.2012
(51) Int. Cl.: B60B 39/04, B60B 39/10

(54) **Erhöhen der Reibungskraft zwischen einem Rad eines Straßenfahrzeugs und einer Straße**

(30) Priorität: 15.06.2011 DE 102011077521
(71) Anmelder: ROBERT BOSCH GMBH, 70442 Stuttgart (DE)
(72) Erfinder: Walossek, Erik, 31180 Giesen (DE)

(57) **Zusammenfassung**

Ein System 12 zum Erhöhen einer Reibungskraft zwischen einem Rad 14 eines Straßenfahrzeugs 10 und einer Straße 16 umfasst wenigstens einen Granulatbehälter 20 mit Granulat 24 und ein elektronisches Fahrassistenzsystem 18. Der Granulatbehälter 20 streut das Granulat 24 derart vor das Rad 14, dass die Reibungskraft zwischen dem Rad 14 und der Straße 16 erhöht wird. Das Fahrassistenzsystem 18 öffnet dabei den Granulatbehälter 20 automatisch, wenn das Fahrassistenzsystem 18 eine verminderte Reibungskraft zwischen der Straße 16 und dem Rad 14 erkennt.

## Beschreibung

Erhöhen der Reibungskraft zwischen einem Rad eines Straßenfahrzeugs und einer Straße

### GEBIET DER ERFINDUNG

Die Erfindung betrifft ein System und ein Verfahren zum Erhöhen einer Reibungskraft zwischen einem Rad eines Straßenfahrzeugs und einer Straße sowie ein Straßenfahrzeug.

### HINTERGRUND DER ERFINDUNG

Kraftfahrzeuge im Straßenverkehr verfügen im Allgemeinen über Fahrassistenzsysteme, die die Traktion der Räder auf der Straße verbessern können (ABS, ESP). Bei Glatteis können diese Systeme jedoch an ihre Grenzen stoßen, da die Haftreibung des Gummis der Reifen auf dem Eis sehr gering ist. Spikes in den Reifen könnten an dieser Stelle Abhilfe schaffen. Sie sind jedoch in vielen Ländern nicht erlaubt und können den Fahrkomfort auf glatten Straßen verschlechtern.

Schienenfahrzeuge besitzen häufig eine Besandungsanlage, um die Traktion der Räder auf der Schiene zu verbessern. Diese kommt bei schlechten Witterungsverhältnissen (Nässe, Eis oder Laub auf den Schienen) an Steigungen oder Gefällen zum Einsatz. Verwendet wird feiner Quarzsand, der in der Regel durch den Fahrer manuell dosiert wird.

Die DE 10 2007 042 495 A1 beschreibt ein Antischlupfsystem an Kraftfahrzeugen bei Eis- und Schneeglätte. Das System umfasst für jedes Rad einen Behälter mit Quarzitsand. Sobald der Fahrer das Bremspedal betätigt, strömt Quarzitsand aus den Behältern vor die Räder.

### ZUSAMMENFASSUNG DER ERFINDUNG

Es ist Aufgabe der Erfindung das Bremsen und Beschleunigen eines Straßenfahrzeugs bei schlechten Straßenverhältnissen zu verbessern.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein System bzw. eine Vorrichtung zum Erhöhen einer Reibungskraft zwischen einem Rad eines Straßenfahrzeugs und einer Straße. Das Straßenfahrzeug kann ein PKW oder LKW sein und wird in der Regel mehrere gummibereifte Räder umfassen.

Gemäß einer Ausführungsform der Erfindung umfasst das System wenigstens einen Granulatbehälter mit Granulat. Der Granulatbehälter ist dazu ausgeführt, das Granulat derart vor das Rad zu streuen, so dass die Reibungskraft zwischen dem Rad und einer Straße erhöht wird. Beispielsweise kann sich vor jedem Rad des Straßenfahrzeugs ein Granulatbehälter befinden, der etwa im Radkasten des Rads angebracht ist. Der Granulatbehälter kann einen ansteuerbaren Verschlussmechanismus bzw. Dosiermechanismus umfassen, der geöffnet und geschlossen werden kann, so dass einerseits Granulat aus dem Behälter durch Schwerkraftwirkung fallen kann oder anderseits im Behälter verbleibt.

Gemäß einer Ausführungsform der Erfindung umfasst das System ein elektronisches Fahrassistenzsystem, beispielsweise ABS, EPS, das dazu ausgeführt ist eine verminderte Reibungskraft zwischen der Straße und dem Rad zu erkennen. Dies kann entweder indirekt über das Rutschverhalten des Rads (wie beim ABS) oder direkt über Beobachtung der Straßenoberfläche vor dem Rad erfolgen. Beispielsweise können hierbei ein optische Assistenzsystem, das in der Lage ist eine Straßenzustandserkennung oder Objekterkennung durchzuführen oder eine Fahrzeug-zu-Fahrzeug-Kommunikation (C2X) zum Einsatz kommen.

Gemäß einer Ausführungsform der Erfindung ist das elektronische Fahrassistenzsystem dazu ausgeführt, den Granulatbehälter automatisch zu öffnen, so dass zumindest ein Teil des Granulats den Granulatbehälter verlässt, wenn das Fahrassistenzsystem eine verminderte Reibungskraft zwischen der Straße und dem Rad erkennt. Das Fahrassistenzsystem kann derart mit dem Behälter verbunden sein, dass es den Verschlussmechanismus ansteuern kann, um ihn zu öffnen und zu schließen.

Damit kann der Einsatz einer Bestreuungsanlage durch ein vorhandenes Fahrassistenzsystem (ABS, ESP) gesteuert werden. Ein weiterer positiver Nebeneffekt des Systems kann eine gezielte Bestreuung von Straßenbereichen sein, die durch die Fahrassistenzsysteme der vorausfahrenden Fahrzeuge bereits als rutschgefährdet erkannt wurden. Die nachfolgenden Fahrzeuge profitieren somit von dem aufgebrachten Granulat der anderen Fahrzeuge, wodurch deren Verbrauch wiederum verringert wird.

Mit dem System kann insbesondere die Traktion von Gummireifen auf Glatteisflächen verbessert werden und somit das Beschleunigen (Anfahren) und Bremsen in gefährlichen Situationen unterstützt werden. Hierdurch können durch Glatteis / Reifglätte verursachte Auffahrunfälle wirkungsvoll reduziert werden. Weiterhin kann die Traktion beim Anfahren erheblich verbessert werden.

Gemäß einer Ausführungsform der Erfindung ist das Fahrassistenzsystem dazu ausgeführt, eine Menge des abgegebenen Granulats in Abhängigkeit von ermittelten Fahrzeugparametern und/oder ermittelten Straßenparametern einzustellen. Die ermittelten Fahrzeugparameter können dabei die Geschwindigkeit des Fahrzeugs, die Reifenbreite und die Bremskraft umfassen. Die ermittelten Straßenparameter können dabei insbesondere die derzeitige Straßenbeschaffenheit und den derzeitigen Zustand der Straße (Glatteis, Nässe) umfassen. Die Menge des abgegebenen Granulats wird beispielsweise über den Zeitraum zwischen Öffnen und Schließen des Verschlussmechanimus oder über eine Öffnungsgröße des Verschlussmechanimus gesteuert. Durch automatisierte Dosierung des Granulates durch Kopplung mit einem vorhandenen Fahrassistenzsystem kann die Reaktionsschnelligkeit erhöht und der Verbrauch des Granulats durch gezielte Verwendung vermindert werden.

Gemäß einer Ausführungsform der Erfindung ist das Fahrassistenzsystem dazu ausgeführt, den Füllstand des Granulatbehälters zu ermitteln. Dazu kann der

Granulatbehälter einen Füllstandsensor umfassen, der den aktuellen Füllstand des Granulatbehälters an das Fahrassistenzsystem meldet.

Gemäß einer Ausführungsform der Erfindung ist der Granulatbehälter derart ausgeführt, dass die enthaltene Granulatmenge beim Öffnen auf einmal abgegeben wird. Auf diese Weise kann besonders in Gefahrensituation, also beispielsweise, wenn das Fahrassistenzsystem eine drohende Kollision erkannt hat, die Bremskraft mit einfachen Mitteln erhöht werden.

Gemäß einer Ausführungsform der Erfindung ist der Granulatbehälter als austauschbare Patrone ausgeführt, die durch einen Fahrer des Fahrzeugs ausgetauscht werden kann. Mit anderen Worten ist der Granulatbehälter derart ausgeführt, dass er, wenn er geleert wurde, auf einfache Weise mit einem bereits vorgefülltem Behälter von einem Fahrer des Fahrzeugs ausgetauscht werden kann.

Gemäß einer Ausführungsform der Erfindung ist der Granulatbehälter als luftdichte Patrone ausgeführt, die einen Treibsatz zum Öffnen der Patrone umfasst. Die Patrone kann somit trocken und luftdicht verschlossen sein, sodass eine zusätzliche Schutzvorrichtung entfallen kann, die den Inhalt vor dem Einfrieren schützt. Mit dem Treibsatz kann die Patrone auf einfache Art und Weise schnell geöffnet werden.

Gemäß einer Ausführungsform der Erfindung umfasst der Granulatbehälter eine Heizvorrichtung, die dazu ausgeführt ist, das Granulat im Granulatbehälter vor einem Einfrieren zu schützen. Insbesondere dann, wenn die Außentemperatur unter den Gefrierpunkt sinkt und das Eindringen von Feuchtigkeit nicht verhindert werden kann, kann mit dem Einsatz einer Vorrichtung gegen das Einfrieren des Behälters sichergestellt werden, dass das Granulat aus dem Granulatbehälter fallen kann.

Gemäß einer Ausführungsform der Erfindung umfasst das Granulat ein grobkörniges Granulat, beispielsweise mit einem Granulatdurchmesser von mehr als 3 mm. Bei der Verwendung von grobkörnigem Granulat, wie etwa Splitt, anstelle von Quarzitsand kann das Gewicht des Granulats reduziert und ein besserer Grip für Gummireifen bereitgestellt werden.

Ein weiterer Aspekt der Erfindung betrifft ein Straßenfahrzeug das mehrere Räder umfasst. Ein PKW wird dabei in der Regel vier, ein LKW kann auch mehr Räder umfassen.

Gemäß einer Ausführungsform der Erfindung umfasst das Straßenfahrzeug ein System so wie es obenstehend und untenstehend beschrieben ist, und wenigstens zwei Granulatbehälter, die vor Rädern positioniert sind, auf die die größten Kräfte beim Beschleunigen wirken. Unter einer Beschleunigung kann dabei ein Verzögern bzw. ein Erhöhen der Geschwindigkeit verstanden werden. Wenn Granulatbehälter nur vor die Räder positioniert werden, auf die die größten Beschleunigungs- / Verzögerungskräfte einwirken, kann mit einer geringen Mengen von Granulatbehältern eine wirksame Erhöhung der Traktion erzielt werden.

Ein weiterer Aspekt der Erfindung betrifft ein Verfahren zur Erhöhung der Reibungskraft zwischen einem Rad eines Straßenfahrzeugs und einer Straße. Die oben genannte Vorrichtung kann dazu ausgeführt sein, dieses Verfahren durchzuführen. Umgekehrt können auch Ausführungsformen der Vorrichtung bzw. des Straßenfahrzeugs Ausführungsformen des Verfahrens sein.

Gemäß einer Ausführungsform der Erfindung umfasst das Verfahren die Schritte von: Erkennen einer verminderten Reibungskraft zwischen der Straße und dem Rad durch ein elektronisches Fahrassistenzsystem des Fahrzeugs; und Automatisches Öffnen eines Granulatbehälters durch das Fahrassistenzsystem, wenn das Fahrassistenzsystem die verminderte Reibungskraft erkennt, so dass zumindest ein Teil des Granulats den Granulatbehälter verlässt und vor das Rad des Straßenfahrzeugs gestreut wird. Insbesondere durch das automatische Öffnen, d.h. einem Öffnen ohne Mitwirkung des Fahrers, wird die Traktion des Fahrzeugs im Bedarfsfall nach relativ kurzer Zeit erhöht.

Gemäß einer Ausführungsform der Erfindung wird der Granulatbehälter geöffnet, wenn ein Blockieren des Rads erkannt wird. Beispielsweise ein ABS-Assistenzsystem kann ein derartiges Blockieren erkennen.

Gemäß einer Ausführungsform der Erfindung wird der Granulatbehälter geöffnet, wenn ein Ausbrechen einer Achse des Fahrzeugs erkannt wird. Dies kann beispielsweise durch ein ESP-Assistenzsystem erfolgen.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt schematisch ein Straßenfahrzeug gemäß einer Ausführungsform der Erfindung.
Fig. 2 zeigt schematisch ein System zum Erhöhen einer Reibungskraft zwischen einem Rad einer Straße gemäß einer Ausführungsform der Erfindung.
Fig. 3 zeigt schematisch ein System zum Erhöhen einer Reibungskraft zwischen einem Rad einer Straße gemäß einer weiteren Ausführungsform der Erfindung.

Grundsätzlich sind identische oder ähnliche Teile mit den gleichen Bezugszeichen versehen.

### DETAILIERTE BESCHREIBUNG VON AUSFÜHRUNGSBEISPIELEN

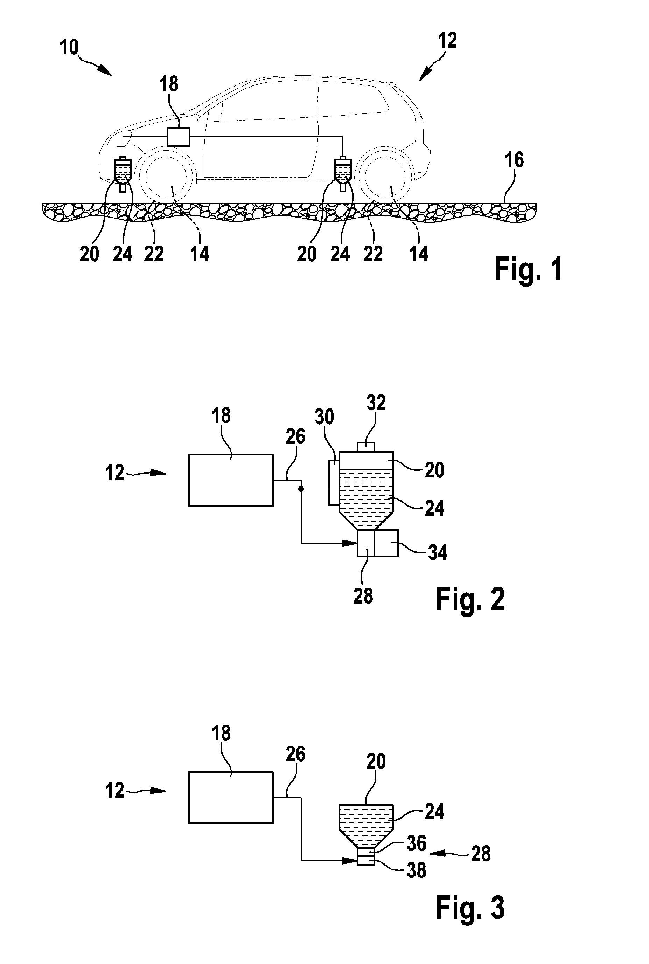

Fig. 1 zeigt ein Straßenfahrzeug 10 in der Form eines PKWs 10, der ein System 12 zur Erhöhung der Reibungskraft zwischen den Rädern 14 einer Straße 16, auf dem sich das Fahrzeug 10 befindet, umfasst. Das System 12 umfasst ein Fahrassistenzsystem 18 und mehrere Granulatbehälter 20, die vor den Rädern 14 am Fahrzeug 10 angebracht sind.

Die Räder 14 des Fahrzeugs 10 umfassen Gummireifen 22, deren Haft- und Gleitreibung auf der Straße 16 erhöht wird, wenn ein insbesondere grobkörniges Granulat 24 aus den Granulatbehälter 22 auf die Straße 16 vor die Reifen 22 gestreut wird. Dazu kann das Fahrassistenzsystem die Granulatbehälter 20 ansteuern und dabei öffnen und schließen. Entsprechend der Fahrsituation, wie etwa Bremsen, Anfahren, Kurvenfahrt, wird von dem Fahrassistenzsystem 18 automatisch Granulat 24 freigegeben, um somit die Traktion zwischen Gummireifen 22 und der beispielsweise mit Glatteis überzogenen Straße 16 zu verbessern.

Wie in der Fig. 1 dargestellt kann das Fahrzeug 10 an jedem Rad 14 mit einem Granulatbehälter 20 versehen sein. Im Falle eines Frontantriebes können die Granulatbehälter 20 an den Hinterrädern 14 entfallen, da auf sie beim geradlinigen Bremsen oder Beschleunigen im Verhältnis zu den Vorderrädern nur geringe Kräfte einwirken.

Die einzelnen Granulatbehälter 20 sind jeweils vor den Rädern 14 in den Holräumen zwischen Karosserieblech und Motorraum (Vorderrad) bzw. Innenraum (Hinterrad) platziert. Aufgrund des automatisierten Einsatzes und Dosierung der Menge des Granulats 24 benötigen die Granulatbehälter 20 kein sehr großes Volumen. Beispielsweise kann bei einem einen Kompaktwagen ein Granulatbehälter 20 ein Volumen von ca. 2 bis 3 Liter aufweisen.

Der Einsatz des Granulates 24 wird durch das Fahrassistenzsystem 18 im Fahrzeug 10 geregelt. Beispielsweise kann das Fahrassistenzsystem 18 eine ABS-Steuerung 18 sein. Die ABS-Steuerung 18 ist dazu in der Lage zu erkennen, dass die Räder 14 beim Bremsen blockieren und damit die Reibung von einer Rollreibung in eine Gleitreibung übergeht.

Wenn die ABS-Steuerung 18 erkennt, dass das oder die Räder 14 bei nur geringer Bremskraft blockieren, kann sie Granulat 24 freigeben. Die Menge des eingesetzten Granulates 24 wird hierbei durch die erzielte Bremswirkung geregelt. In Abhängigkeit von Geschwindigkeit, Reifenbreite, Bremskraft und Straßenbeschaffenheit sind verschiedene Austrittsmengen erforderlich, die durch das Fahrassistenzsystem 18 anhand der vorhandenen Messgrößen berechnet werden. Insbesondere in diesem Fall kann der automatische Granulateinsatz zur Notbremsung verwendet werden.

Weiter ist es möglich das Granulat 24 zum Anfahren zu verwenden. Diese Funktion könnte entsprechend der vorhandenen Menge an Granulat 24 nur dann aktiviert sein, wenn genügend Granulat 24 vorhanden ist, so dass später in einer Notsituation noch genügend Granulat 24 verwendet werden kann. Der Einsatz könnte nur manuell durch den Fahrer des Fahrzeugs 10 erfolgen. Auch im Falle des Anfahrens kann die ausgestreute Menge des Granulats 24 durch das Fahrassistenzsystem 18 (ASR/ ESP) vorgegeben werden.

Darüber hinaus kann das System 12 zum automatischen Granulateinsatz bei einer Kurvenfahrt verwendet werden. In diesem Fall kann das Ausbrechen einer Hinterachse des Fahrzeugs 10 durch eine ESP-Steuerung 18 erkannt werden. Wird ein Ausbrechen der Hinterachse erkannt, kann das Fahrassistenzsystem 18 selektiv Granulat 24 aus den Granulatbehältern 20 an den hinteren Rädern 14 ausgeben.

Das System 12 kann insbesondere als Notbrems- und Traktionshilfe bei Glatteis umgesetzt sein. In diesem Fall kann, um Granulat zu sparen, der Einsatz von Granulat 24 erst bei Temperaturen erfolgen, die das Auftreten von Glatteis ermöglichen, beispielsweise bei Temperaturen kleiner 3°C. Dazu ermittelt das Fahrassistensystem 18 die Außentemperatur, beispielsweise mittels eines Sensors, und aktiviert die Granulatausgabe nur dann, wenn die Außentemperatur kleiner als eine vorgegebene Maximaltemperatur ist.

Der hier beschriebene Aufbau der Systems 12 kann unter Berücksichtigung der veränderten Gegebenheiten auch auf Fahrzeuge 10, die mehr als 2 Achsen besitzen (z.B. LKW), angewandt werden.

Die Fig. 2 zeigt ein System 12 mit einem Fahrassistenzsystem 18 bzw. einer Steuerung 18, die über eine Steuerleitung 26 mit einem Verschlussmechanismus 28 eines dosierbaren Granulatbehälters 20 verbunden ist. Das Fahrassistenzsystem 18 kann ein ABS-, ESP und weitere Steuergeräte umfassen, die in der Lage sind eine Situation zu ermitteln, bei der das Granulat 24 aus dem Behälter 20 eingesetzt werden soll. Über die Steuerleitung 26 kann das Fahrassistenzsystem 18 den Verschlussmechanismus 28 öffnen und schließen, um so die Menge des ausgegeben Granulats 24 zu steuern.

Auch kann der Granulatbehälter 24 einen Füllstandssensor 30 umfassen, der die Menge des Granulats 24 im Behälter 20 ermitteln und an das Fahrassistenzsytem 18 über die Steuerleitung 26 übermitteln kann. Das Fahrassistenzsystem 18 kann daraus eine Füllstandsanzeige für sämtliche Behälter 20 bereitstellen, um den Fahrer über den Verbrauch an Granulat 24 zu informieren.

Beispielsweise kann der Fahrer des Fahrzeugs 10, die Behälter 20 über einen Einfüllstutzen 32 neu mit Granulat 24 füllen. Es ist aber auch möglich, das der Behälter 20 als Patrone ausgeführt ist, die nach Leerung vom Fahrer mit einer gefüllten Patrone ausgetauscht werden kann.

Weiterhin kann der Behälter 20 und insbesondere der Verschluss- bzw. Dosiermechanismus 28 gegen einfrieren gesichert sein. Dies kann durch eine geschützte Anbringung und eine automatische Beheizung mit einer Heizeinrichtung 34 erfolgen.

Die Fig. 3 zeigt ein System 12 mit einem Fahrassistenzsystem 18 und einem Granulatbehälter 20, der für den Einmalgebrauch ausgelegt ist. die Öffnung des Granulatbehälters 20 ist mit einem Verschlussmechanismus 28 versehen, der auf ein Signal des Fahrassistenzsystems 18 geöffnet aber nicht mehr verschlossen werden kann. Dies kann beispielsweise durch eine Verschlusskappe 38 mit einem Treibsatz 36 geschehen, mit dem die Verschlussklappe 38 von der Öffnung des Behälters 20 entfernt werden kann. Da sich das Granulat 24 in einem Behälter 20 befindet, dessen Öffnung nach unten gerichtet ist, läuft es selbstständig aus dem Behälter 20 aus, wenn die Verschlusskappe 38 entfernt wurde.

Beispielsweise kann der Granulatbehälter 20 eine austauschbare Patrone 20 sein, deren Verschlusskappe 38 in einer Gefahrensituation (beispielsweise ein drohender Zusammenstoß) entfernt wird (z.B. mit Hilfe des Treibsatzes 36). Dadurch wird das Granulat 24 freigegeben, um die Traktion zwischen Reifengummi der Reifen 22 und der mit Glatteis überzogenen Straßendecke 16 zu verbessern.

Insbesondere, wenn das System 12 lediglich zur Verhinderung einer Kollision verwendet werden soll (also beispielsweise für ein bis zwei Einsätze ausgelegt ist), kann die mitgeführte Menge Granulat 24 reduziert werden, um das Gewicht des Fahrzeuges 10 zu reduzieren. Eine mögliche Realisierungsvariante wäre in diesem Fall die Ausführung des Granulatbehälters 20 als Patrone 20, so wie es in Fig. 3 dargestellt ist. Erkennt das Fahrassistenzsystem 18 eine drohende Kollision, wird der Treibsatz 38 gezündet und das Granulat 24 tritt nach unten aus. Die gezündete Granulatpatrone 20 kann später durch den Fahrer einfach wieder durch eine neue Patrone 20 ersetzt werden.

Der Vorteil einer Patrone 20 liegt weiterhin in der einfachen Realisierungsmöglichkeit. Durch eine gekapselte und vor Feuchtigkeit geschützte Ausführung kann eine Einrichtung, die den Behälter 20 vor dem Einfrieren schützt, entfallen.

Wenn das System 12 nur im Falle einer (recht seltenen) drohenden Kollision ausgelöst wird, kann dem Fahrer ein manueller Wechsel der Patronen 20 zugemutet werden. Durch eine mehrfache Anordnung von Patronen 20, können ggf. auch mehrfache Einsätze realisiert werden.

Das Fahrassistenzsystem 12 kann auch dazu ausgeführt sein, bereits gezündete Patronen 20 zu erkennen und dem Fahrer zum Austausch anzuzeigen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System (12) zum Erhöhen einer Reibungskraft zwischen einem Rad (14) eines Straßenfahrzeugs (10) und einer Straße (16), das System umfassend:
wenigstens einen Granulatbehälter (20) mit Granulat (24),
ein elektronisches Fahrassistenzsystem (18),
wobei der Granulatbehälter (20) dazu ausgeführt ist, das Granulat (24) derart vor das Rad (14) zu streuen, dass die Reibungskraft zwischen dem Rad (14) und der Straße (16) erhöht wird,
**dadurch gekennzeichnet, dass**
das Fahrassistenzsystem (18) dazu ausgeführt ist, den Granulatbehälter (20) automatisch zu öffnen, so dass zumindest ein Teil des Granulats (24) den Granulatbehälter (20) verlässt, wenn das Fahrassistenzsystem (18) eine verminderte Reibungskraft zwischen der Straße (16) und dem Rad (14) erkennt.

2. System (12) nach Anspruch 1,
wobei das Fahrassistenzsystem (18) dazu ausgeführt ist,
eine Menge des abgegebenen Granulats (24) in Abhängigkeit von ermittelten Fahrzeugparametern und/oder ermittelten Straßenparametern einzustellen.

3. System (12) nach Anspruch 1 oder 2,
wobei das Fahrassistenzsystem (18) dazu ausgeführt ist, den Füllstand des Granulatbehälters (20) zu ermitteln.

4. System (12) nach Anspruch 1,
wobei der Granulatbehälter (20) derart ausgeführt ist, dass eine enthaltene Granulatmenge beim Öffnen auf einmal abgegeben wird.

5. System (12) nach einem der vorhergehenden Ansprüche,
wobei der Granulatbehälter (20) als austauschbare Patrone ausgeführt ist, die durch einen Fahrer des Fahrzeuges ausgetauscht werden kann.

6. System (12) nach einem der vorhergehenden Ansprüche,
wobei der Granulatbehälter (20) eine Heizvorrichtung (34) umfasst, die dazu ausgeführt ist, Granulat (24) im Granulatbehälter (20) vor einem Einfrieren zu schützen.

7. System (12) nach einem der vorhergehenden Ansprüche,
wobei der Granulatbehälter (20) als luftdichte Patrone ausgeführt ist, die einen Treibsatz zum Öffnen der Patrone umfasst.

8. System (12) nach einem der vorhergehenden Ansprüche,
wobei das Granulat (24) ein grobkörniges Granulat mit einem Granulatdurchmesser von mehr als 3 mm umfasst.

9. Straßenfahrzeug (10), umfassend:
mehrere Räder (14),
ein System (12) gemäß einem der Ansprüche 1 bis 8,
wobei das System (12) wenigstens zwei Granulatbehälter (20) umfasst, die vor Rädern (14) positioniert sind, auf die die größten Kräfte beim Beschleunigen wirken.

10. Verfahren zur Erhöhung der Reibungskraft zwischen einem Rad (14) eines Straßenfahrzeugs (10) und einer Straße (16), umfassend die Schritte:
Erkennen einer verminderten Reibungskraft zwischen der Straße (16) und
dem Rad (14) durch ein elektronisches Fahrassistenzsystem (18) des Fahrzeugs;
Automatisches Öffnen eines Granulatbehälters (20) durch das Fahrassistenzsystem (18), wenn das Fahrassistenzsystem (18) die verminderte Reibungskraft erkennt, so dass zumindest ein Teil des Granulats (24) den Granulatbehälter (20) verlässt und vor das Rad (14) des Straßenfahrzeugs (10) gestreut wird.

11. Verfahren nach Anspruch 10,
wobei der Granulatbehälter (20) geöffnet wird, wenn ein Blockieren des Rads (14) erkannt wird, und/oder
wobei der Granulatbehälter (20) geöffnet wird, wenn ein Ausbrechen einer Achse des Fahrzeugs (10) erkannt wird.

## Geänderte Patentansprüche

### Geänderte Patentansprüche gemäss Regel 137(2) EPÜ.

**1.** System (12) zum Erhöhen einer Reibungskraft zwischen einem Rad (14) eines Straßenfahrzeugs (10) und einer Straße (16), das System umfassend:
wenigstens einen Granulatbehälter (20) mit Granulat (24),
ein elektronisches Fahrassistenzsystem (18),
wobei der Granulatbehälter (20) dazu ausgeführt ist, das Granulat (24) derart vor das Rad (14) zu streuen, dass die Reibungskraft zwischen dem Rad (14) und der Straße (16) erhöht wird,
wobei das Fahrassistenzsystem (18) dazu ausgeführt ist, den Granulatbehälter (20) automatisch zu öffnen, so dass zumindest ein Teil des Granulats (24) den Granulatbehälter (20) verlässt, wenn das Fahrassistenzsystem (18) eine verminderte Reibungskraft zwischen der Straße (16) und dem Rad (14) erkennt,
**dadurch gekennzeichnet, dass**
der Granulatbehälter (20) derart ausgeführt ist, dass eine enthaltene Granulatmenge beim Öffnen auf einmal abgegeben wird,
der Granulatbehälter (20) als austauschbare Patrone ausgeführt ist, die durch einen Fahrer des Fahrzeuges ausgetauscht werden kann, und
der Granulatbehälter (20) als luftdichte Patrone ausgeführt ist, die einen Treibsatz zum Öffnen der Patrone umfasst, welcher im Falle der Erkennung einer drohenden Kollision durch das Fahrerassistenzsystem (18) gezündet wird.

**2.** System (12) nach Anspruch 1,
wobei das Fahrassistenzsystem (18) dazu ausgeführt ist,
eine Menge des abgegebenen Granulats (24) in Abhängigkeit von ermittelten Fahrzeugparametern und/oder ermittelten Straßenparametern einzustellen.

**3.** System (12) nach Anspruch 1 oder 2,
wobei das Fahrassistenzsystem (18) dazu ausgeführt ist, den Füllstand des Granulatbehälters (20) zu ermitteln.

**4.** System (12) nach einem der vorhergehenden Ansprüche,
wobei der Granulatbehälter (20) eine Heizvorrichtung (34) umfasst, die dazu ausgeführt ist, Granulat (24) im Granulatbehälter (20) vor einem Einfrieren zu schützen.

**5.** System (12) nach einem der vorhergehenden Ansprüche,
wobei das Granulat (24) ein grobkörniges Granulat mit einem Granulatdurchmesser von mehr als 3 mm umfasst.

**6.** Straßenfahrzeug (10), umfassend:
mehrere Räder (14),
ein System (12) gemäß einem der Ansprüche 1 bis 8,
wobei das System (12) wenigstens zwei Granulatbehälter (20) umfasst, die vor Rädern (14) positioniert sind, auf die die größten Kräfte beim Beschleunigen wirken.

**7.** Verfahren zur Erhöhung der Reibungskraft zwischen einem Rad (14) eines Straßenfahrzeugs (10) und einer Straße (16), umfassend die Schritte:
Erkennen einer verminderten Reibungskraft zwischen der Straße (16) und dem Rad (14) durch ein elektronisches Fahrassistenzsystem (18) des Fahrzeugs;
Automatisches Öffnen eines Granulatbehälters (20) durch das Fahrassistenzsystem (18), wenn das Fahrassistenzsystem (18) die verminderte Reibungskraft erkennt, so dass zumindest ein Teil des Granulats (24) den Granulatbehälter (20) verlässt und vor das Rad (14) des Straßenfahrzeugs (10) gestreut wird,
**dadurch gekennzeichnet, dass**
der Granulatbehälter (20) derart ausgeführt ist, dass eine enthaltene Granulatmenge beim Öffnen auf einmal abgegeben wird,
der Granulatbehälter (20) als austauschbare Patrone ausgeführt ist, die durch einen Fahrer des Fahrzeuges ausgetauscht werden kann, und
der Granulatbehälter (20) als luftdichte Patrone ausgeführt ist, die einen Treibsatz zum Öffnen der Patrone umfasst, welche im Falle der Erkennung einer drohenden Kollision durch das Fahrerassistenzsystem (18) gezündet wird.

**8.** Verfahren nach Anspruch 7,
wobei der Granulatbehälter (20) geöffnet wird, wenn ein Blockieren des Rads (14) erkannt wird, und/oder
wobei der Granulatbehälter (20) geöffnet wird, wenn ein Ausbrechen einer Achse des Fahrzeugs (10) erkannt wird.
